(19) Europäisches Patentamt
European Patent Office
Office européen des brevets

(11) EP 2 083 987 B1

(12) **EUROPEAN PATENT SPECIFICATION**

(45) Date of publication and mention of the grant of the patent:
**05.09.2012 Bulletin 2012/36**

(21) Application number: **07846627.3**

(22) Date of filing: **16.11.2007**

(51) Int Cl.:
***B29C 49/00*** (2006.01) ***B32B 27/32*** (2006.01)
***C08J 5/18*** (2006.01) ***C08K 5/00*** (2006.01)
***C08L 23/10*** (2006.01) ***C08L 23/08*** (2006.01)

(86) International application number:
**PCT/EP2007/009918**

(87) International publication number:
**WO 2008/061676 (29.05.2008 Gazette 2008/22)**

(54) **ARTICLE**

ARTIKEL

ARTICLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.11.2006 EP 06255921**

(43) Date of publication of application:
**05.08.2009 Bulletin 2009/32**

(73) Proprietor: **Borealis Technology OY**
**06101 Porvoo (FI)**

(72) Inventors:
- **OYSAEDM, Harry**
  **3960 Stathelle (NO)**
- **JÄÄSKELAINEN, Pirjo**
  **06150 Porvoo (FI)**
- **OMMUNDSEN, Espen**
  **3960 Stathelle (NO)**
- **JOHANSEN, Geir Morten**
  **3960 Stathelle (NO)**
- **WACHHOLDER, Max**
  **4021 Linz (AT)**

(74) Representative: **Campbell, Neil Boyd**
**Dehns**
**St Bride's House**
**10 Salisbury Square**
**London**
**EC4Y 8JD (GB)**

(56) References cited:
**EP-A- 1 674 238**
**EP-A1- 0 903 356**
**WO-A-02/38383**
**WO-A-99/24478**
**US-A- 5 286 540**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 083 987 B1

## Description

The present invention relates to articles comprising a polypropylene composition, to processes for preparing the afore-mentioned articles and to the polypropylene composition *per se.* Articles of particular interest in the present invention are containers (e.g. bottles, cups, vials etc) that are suitable for use in the medical and food industries.

Propylene polymers have excellent heat resistance and chemical resistance and, in the moulded form, have desirable mechanical properties such as rigidity and impact resistance. Propylene polymers are therefore an attractive option for the production of articles for use in the medical and food industries, which often contact chemicals, undergo sterilisation and are transported and stored prior to use.

A well known problem associated with articles made from propylene polymers, however, is that they tend to have poor transparency, e.g. haze may be as high as 15-20 % or greater on moulded articles having a wall thickness of 0.5 mm. This is a particular problem in the use of polypropylene containers in the medical industry where there are often regulatory requirements that containers having a certain transparency level be used. The requirement ensures, for example, that the amount of medicine in a container can be easily viewed and enables any foreign objects present within the container to be readily spotted.

In semi crystalline polymers, light scattered on the different units of their structure makes products moulded from the polymers opaque. More specifically, in the case of polypropylene, light is scattered on crystallites and spherulites (crystalline phases) and also on the interface between amorphous and crystalline phases having different refractive indices. In polypropylene the size of crystalline units is often large enough to interfere with visible light and this interference results in haze, which is often used to characterise plastic products. Haze is the total flux of light scattered within the angular range 2.5 to 90° and normalised to the total transmitted flux.

Adding a nucleating agent to polypropylene leads to an increase in the number of nuclei present during crystallisation which results in a decrease in spherulite size. When spherulite size reaches a critical value, i.e. it becomes smaller than the wavelength of the incident light, transparency is improved.

Various different nucleating agents have been used to improve transparency in this way. EP-A-0251340, for example, discloses injection stretch blow moulded (ISBM) containers for use in therapeutic applications that comprise polypropylene and a nucleating agent such as benzoic acid, sodium benzoate or more preferably dibenzylidenesorbitol or a derivative thereof. Similarly EP-A-1674238 teaches that high transparency containers are provided by ISBM compositions comprising polypropylene and inorganic non-sorbitol nucleating agents.

However when polypropylene compositions containing nucleating agents such as sorbitol or sorbitol derivatives are heated during the moulding process, odours are often generated and these remain in the final products. Leaching can also occur when these articles are filled with a liquid. These effects are clearly unacceptable in articles (e.g. containers) that are used in the medical and food industries, especially the medical industry.

Another agent that is known to have a nucleating effect on polypropylene is a polymer of vinyl cyclohexane. WO02/38383, for example, describes self supporting sheets comprising highly crystalline polypropylene polymer and optionally a polymeric nucleating agent. When vinyl cyclohexane is used as the nucleating agent it may be copolymerised with propylene and the copolymeric nucleating agent is used in an amount of about 1 % w/w relative to the amount of the highly crystalline polypropylene. There is, however, no mention in WO02/38383 of the effect of the nucleating agent on the transparency of the sheets finally produced.

US 4,696,979 also discloses a propylene polymer composition comprising crystalline polypropylene and a polymer of a vinyl cycloalkane and teaches that the use of polymers of vinyl cycloalkanes improves both the crystallinity and the transparency of final products. However the examples of US 4,696,979 show that haze is still relatively high in the nucleated polypropylene products. In particular a pressed sheet comprising only of propylene was found to have a haze of 64 %, whereas pressed sheets comprising propylene and a polymer of vinyl cyclohexane are reported to have haze levels of 24-60 %.

EP-A-0151883 discloses very similar compositions and results to US 4,696,979. The examples of EP-A-0151883 show that pressed sheets comprising a crystalline polypropylene and a polymer of a vinyl cycloalkane have a haze of about 20-60 % (measured according to ASTM D1003) whereas sheets prepared solely from polypropylene have a haze of about 60 %. However, a haze in the order of 20 % is still too high for containers that are to be used in the medical and food industries which, as mentioned above, require high transparencies for safety reasons.

US 5,286,540 teaches use of a similar polymeric nucleating agent. More specifically US 5,286,540 discloses that 0.0001-10 % by weight of the nucleating agent, 3-methylbutene-1 polymer, should be added to a propylene homopolymer or copolymer to improve the transparency of injection stretch blow moulded articles. The examples in US 5,286,540 show, however, that the transparency of containers comprising the polymeric nucleating agent are comparable to those wherein the nucleating agent is absent. In other words, the examples show that the 3-methylbutene-1 polymer has no or little effect on the transparency of the injection stretch blow moulded articles. Moreover the transparency level (measured as parallel light transmittance) of the articles is only around 16-26%.

A further problem associated with the polypropylene compositions described in US 5,286,540 is that ISBM is

utilised as the processing technique, but it is well known that polypropylene has a narrow processing window when used in ISBM processes, i.e. polypropylene can only be stretched or blown only over a narrow temperature range. This is industrially unfavourable since close temperature control is both difficult and expensive to implement.

A need therefore exists for alternative polypropylene articles for use in the medical and food industries that have high transparency (i.e. low haze) and are facile to make, e.g. by ISBM. It has now been surprisingly found that articles having these advantages may be prepared by injection stretch blow moulding a polypropylene composition which comprises a multimodal polypropylene and a polymeric nucleating agent.

Thus viewed from one aspect the invention provides an article comprising a biaxially oriented polypropylene composition, wherein said composition comprises:

(i) a multimodal polypropylene comprising (e.g. consisting of):

(A) at least 5% wt of a propylene homopolymer or a propylene copolymer; and
(B) at least 5 % wt of a propylene copolymer having a different comonomer content to that of component (A); and

(ii) a polymeric nucleating agent wherein said polymeric nucleating agent is a homopolymer of a vinyl compound of formula (I)

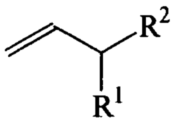

(I)

wherein $R^1$ and $R^2$, together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

Viewed from a further aspect the invention provides a process for making an article as hereinbefore described comprising injection stretch blow moulding a polypropylene composition, wherein said composition comprises:

(i) a multimodal polypropylene comprising (e.g. consisting of):

(A) at least 5 % wt of a propylene homopolymer or a propylene copolymer; and
(B) at least 5% wt of a propylene copolymer having a different comonomer content to that of component (A); and

(ii) a polymeric nucleating agent wherein said polymeric nucleating agent is a homopolymer of a vinyl compound of formula (I)

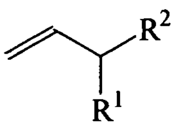

(I)

wherein $R^1$ and $R^2$, together with the carbon atom they are attached to, form an optionally substituted, fused ring system or saturated, unsaturated
or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

As used herein, the term "biaxially oriented" refers to a polypropylene composition that is stretched in two directions, e.g. during preparation of an article. Preferably the polypropylene composition is stretched in both the machine and transverse directions.

The polypropylene present in the composition of the invention is multimodal, preferably bimodal, with respect to comonomer content. The polypropylene present in the composition therefore comprises two or more (e.g. two) separately produced propylene components having different comonomer contents. It is thought that use of such polypropylene facilitates processing, especially by ISBM processes. More specifically, it is believed that the use of multimodal polypropylene increases the ISBM processing window whilst still providing final articles with excellent optical properties.

Multimodality may be achieved by use of a propylene copolymer and a propylene homopolymer. Alternatively, two propylene copolymers with different comonomer content may be present. In this latter case, the different copolymers ensure that the polypropylene is multimodal. Preferably therefore, where two propylene copolymers are present, the nature of the comonomer used in each component will be different and/or the amount of comonomer used in each component will be different, e.g. at least differing by 1 mol%, preferably at least 2 mol%, more preferably at least 3 mol%, still more preferably at least 5 mol%.

Whether the multimodal (e.g. bimodal) polypropylene comprises a propylene copolymer and a propylene homopolymer or two different propylene copolymers, it is preferred that at least 5 % wt, more preferably at least 10 % wt, still more preferably at least 20 %wt, e.g. at least 30 %wt of the total weight of polypropylene derives from each polymer.

Particularly preferred polypropylene for use in the invention comprises:

(A) at least 5 % wt of a propylene homopolymer or a propylene copolymer of propylene and comonomer selected from ethylene and/or $C_{4-10}$ alpha olefin; and

(B) at least 5 % wt of a propylene copolymer of propylene and comonomer selected from ethylene and/or $C_{4-10}$ alpha olefin.

To maximise the processing window in ISBM as well as the transparency of the final moulded articles, the polypropylene preferably comprises 10 to 90 wt % of polymer A, preferably 30 to 70 wt %, more preferably 40 to 60 wt % and most preferably 45 to 55 wt %. The composition also preferably comprises 10 to 90 wt % of polymer B, preferably 30 to 70 wt %, more preferably 40 to 60 wt % and most preferably 45 to 55 wt %.

As used herein the term "homopolymer" is intended to encompass polymers which consist essentially of repeat units deriving from a single monomer. Homopolymers may, for example, comprise at least 99 mol %, preferably at least 99.5 mol %, more preferably at least 99.9 mol % of repeat units deriving from a single monomer.

As used herein the term "copolymer" is intended to encompass polymers comprising repeat units from two or more monomers. In typical copolymers at least 1 mol %, preferably at least 2 mol %, more preferably at least 3 mol %, e.g. at least 5 mol % of repeat units derive from each of at least two different monomers. Copolymers may comprise $\alpha$-olefins having 2 or 4-10 carbon atoms. Examples of suitable monomers include ethylene, but-1-ene, pent-1-ene, hex-1-ene and oct-1-ene. Ethylene is preferred. Another preferred comonomer is but-1-ene. The total amount of any $\alpha$-olefin that is copolymerised with propylene may be up to 50 mol%, more preferably up to 20 mol%, e.g. up to 10 mol%. Preferably the total amount of any $\alpha$-olefin in the polypropylene is 1-30 mol%, more preferably 2-20 mol%, still more preferably 3-10 mol%.

Copolymers present in the polypropylene of the invention may be block copolymers and/or random copolymers, but preferably are random copolymers. By a random copolymer is meant herein that the comonomer is distributed mainly randomly (e.g. randomly) along the polymer chain. Any known olefin polymerisation catalyst may be used to make such polymers, e.g. metallocene or Ziegler Natta catalysts. Preferred random copolymers are those made using Ziegler Natta catalysts. Such copolymers have been found to increase the transparency of the final moulded (e.g. ISBM) articles.

Polymer A preferably comprises up to 5 mol % comonomer, more preferably up to 4 mol % comonomer (e.g. 0-5 mol% comonomer). Where polymer A is copolymeric, the comonomer is preferably ethylene or but-1-ene, e.g. ethylene. In some embodiments of the invention (e.g. when the moulded article is to be sterilised) it is preferred that polymer A is a homopolymer. Homopolymers tend to have higher melting points than copolymers and thus tend to increase the Tm of the final product. In other embodiments, however, it is preferred that polymer A be a copolymer.

The $MFR_2$ of polymer A may be in the range 0.1 to 100 g/10 min, preferably 1 to 60 g/10 min, more preferably 2 to 50 g/10 min, e.g. 5 to 30 g/10 min.

The isotacticity of polymer A when it is a homopolymer may be as high as 98% although will preferably be at least 85 % (e.g. 85-98 %). Still more preferably the isotacticity of polymer A is in the range 90 to 95 %.

The comonomer content of polymer B may be in the range 0.5 to 10 mol %, preferably 2 to 7 mol %, and most preferably 3 to 6 mol %. A preferred comonomer is ethylene. Another preferred comonomer is but-1-ene.

Where both components A and B are copolymeric, it is preferred if polymer B has a higher comonomer content. Alternatively or additionally, polymer B may comprise a different comonomer to polymer A. The polypropylene present in the compositions of the invention may therefore be a terpolymer.

It will be appreciated that in certain circumstances it will be impossible to measure the properties of either polymer A or polymer B directly e.g. when a polymer is made second in a multistage process. The person skilled in the art will be able to work out the properties of each polymer from measurements taken on the first formed component and the overall properties of the polymer composition. The skilled man can, for example, determine the density, $MFR_2$ etc of the higher molecular weight component using Kim McAuley's equations. Thus, both density and $MFR_2$ can be found

using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

$MFR_2$ is calculated from McAuley's equation 25, where final $MFR_2$ and $MFR_2$ after the first reactor is calculated. The use of these equations to calculate polymer properties in multimodal polymers is common place.

Polymer B generally has an $MFR_2$ of similar value to that of polymer A, e.g. within 5 g/10 min thereof, preferably within 3 g/10 min thereof.

The total comonomer content of the polypropylene is preferably 1 to 7 mol %, more preferably at least 1.5 mol%, e.g. 2.0 to 6 mol %, and most preferably 3 to 6 mol%.

The polypropylene of the present invention preferably has a melt flow rate in the range 0.1 to 100 g/10 min, preferably 1 to 60 g/10 min, more preferably 2 to 50 g/10 min, e.g. 5 to 30 g/10 min when measured according to ISO 1133 at 230 °C and a load of 2.16 kg.

The polypropylene of the present invention is also preferably multimodal, e.g. bimodal, with respect to molecular weight distribution (MWD), i.e. its molecular weight profile does not comprise a single peak but instead comprises the combination of two or more peaks (which may or may not be distinguishable) centred about different average molecular weights as a result of the fact that the polymer comprises two or more separately produced components. It is believed that the multimodal nature of the claimed composition with respect to molecular weight distribution allows improvements in processing properties. Preferably the MWD of the polypropylene is in the range 1.5 to 10, more preferably 2 to 7, still more preferably 3 to 5, e.g. about 2 to 4.

The xylene soluble fraction of the polypropylene can range from 0.1 to 20 %, preferably 1 to 15 wt%. Preferably the xylene soluble fraction of the polypropylene is less than 10 wt%, more preferably less than 7 wt%. The melting point of the polymer may range from 140 to 185 °C, e.g. 150 to 180°C, more preferably around 160 to 170°C. The polymer is preferably partially crystalline, e.g. having a crystallinity of the order of 20 to 50 %, e.g. 25 to 40%.

The polypropylene composition of the invention further comprises a polymeric nucleating agent. Polymeric nucleating agents present in the compositions of the present invention comprise vinyl compound units deriving from a vinyl compound of formula (I):

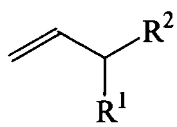

wherein $R^1$ and $R^2$, together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

Preferably $R^1$ and $R^2$, together with the carbon atom they are attached to, form an optionally substituted, optionally $C_{1-2}$ bridged, 5 or 6 membered saturated, unsaturated or aromatic ring or $R^1$ and $R^2$ independently represent a $C_{1-4}$ alkyl group.

In further preferred compounds of formula (I), $R^1$ and $R^2$, together with the carbon atom they are attached to, form a 6 membered ring. Still more preferably $R^1$ and $R^2$, together with the carbon atom they are attached to, form a non-aromatic ring (i.e. a vinyl cycloalkane). In particularly preferred compounds the ring formed by $R^1$ and $R^2$, together with the carbon atom they are attached to, is unsubstituted.

Representative examples of vinyl compounds which may be present in the polymeric nucleating agent used in the present invention include vinyl cyclohexane, vinyl cyclopentane, vinyl-2-methyl cyclohexane or a mixture thereof. Vinyl cyclohexane is a particularly preferred vinyl compound.

The polypropylene present in the compositions of the invention may be prepared by simple blending (e.g. melt blending, preferably extrusion blending), by two or more stage polymerisation or by the use of two or more different polymerisation catalysts in a one stage polymerisation. Blending may, for example, be carried out in a conventional blending apparatus (e.g. an extruder). Propylene homopolymers and copolymers (e.g. random copolymers) that may be used in this invention are commercially available from various suppliers, e.g. Borealis GmbH.

Alternatively the polypropylene may be produced in a multi-stage polymerisation using the same catalyst, e.g. a metallocene catalyst or preferably a Ziegler-Natta catalyst. In a preferred multi-stage polymerisation a slurry polymerisation in a loop reactor is followed by a gas phase polymerisation in a gas phase reactor. Conventional cocatalysts, supports/carriers, electron donors etc. can be used.

A loop reactor - gas phase reactor system is described in EP-A-0887379 and WO92/12182, the contents of which are incorporated herein by reference, and is marketed by Borealis GmbH, Austria as a BORSTAR reactor system.

The propylene polymer used in the invention is thus preferably formed in a two stage process comprising a first slurry loop polymerisation followed by gas phase polymerisation in the presence of a Ziegler-Natta catalyst.

With respect to the above-mentioned preferred slurry-gas phase process, the following general information can be provided with respect to the process conditions.

A temperature of from 40°C to 110°C, preferably between 60°C and 100°C, in particular between 80°C and 90°C is preferably used in the slurry phase. The pressure in the slurry phase is preferably in the range of from 20 to 80 bar, preferably 30 to 60 bar, with the option of adding hydrogen in order to control the molecular weight being available. The reaction product of the slurry polymerization, which preferably is carried out in a loop reactor, is transferred to a subsequent gas phase reactor, wherein the temperature preferably is within the range of from 50°C to 130°C, more preferably 80°C to 100°C. The pressure in the gas phase reactor is preferably in the range of from 5 to 50 bar, more preferably 15 to 35 bar, again with the option of adding hydrogen in order to control the molecular weight available. The residence time can vary in the reactor zones identified above. The residence time in the slurry reaction, for example the loop reactor, may be in the range of from 0.5 to 5 hours, for example 0.5 to 2 hours. The residence time in the gas phase reactor may be from 1 to 8 hours.

The properties of the polypropylene produced with the above-outlined process may be adjusted and controlled with the process conditions as known to the skilled person, for example by one or more of the following process parameters:

temperature, hydrogen feed, comonomer feed, propylene feed, catalyst, type and amount of external donor and the split between two or more components of the polymer.

Preferably, the first polymer of the polypropylene of the invention is produced in a continuously operating loop reactor where propylene (and comonomer when required) is polymerised in the presence of a polymerisation catalyst (e.g. a Ziegler Natta catalyst) and a chain transfer agent such as hydrogen. The diluent is typically an inert aliphatic hydrocarbon, preferably isobutane or propane.

The second polymer can then be formed in a gas phase reactor using the same catalyst. Prepolymerisation can be employed as is well known in the art. Ziegler-Natta catalysts are preferred. The nature of the preferred Ziegler-Natta catalyst is described in numerous prior publications, e.g. US 5234879.

Nucleation of the propylene polymers for use in the invention may be carried out by conventional techniques, e.g. by blending. More preferably, however, when the nucleating agent is a polymer containing vinyl compound units, nucleated propylene polymers are made by modifying a polymerisation catalyst with vinyl compounds as hereinbefore described and using the modified catalyst for the polymerisation of propylene, optionally in the presence of comonomers. The catalyst systems and reaction conditions suitable for application in this latter method are described in WO99/24501. For instance, examples 1 and 2 described therein disclose a specific procedure which may be used to prepare a propylene polymer comprising a polymeric nucleating agent for use in the compositions of the present invention.

The resulting propylene polymers preferably comprise 0.01 to 1000 ppm wt of polymeric nucleating agent. Preferred polypropylene compositions of the invention comprise 0.1 to 100 ppm wt of a polymeric nucleating agent, more preferably 0.5 to 50 ppm wt of polymeric nucleating agent, still more preferably 1 to 10 ppm wt.

The polymer compositions of the present invention may also contain any conventional additives (e.g. process, heat and light stabilisers, colorants, antistatic agents, antioxidants, carbon black, pigments, flame retardants, foaming agents, blowing agents, IR absorber, e.g. Sb and carbon black etc). A filler may also be present (e.g. talc). Preferably, however, the composition does not contain any non-polymeric nucleating agents.

The polypropylene composition is particularly suitable for use in the manufacture of articles by ISBM processes. These stretch the polymer at temperatures below the polymer melting point in a stretch blow moulding step and thereby impact biaxial orientation. This improves the physical and optical properties of the article. In fact, articles made by ISBM of the polypropylene compositions hereinbefore described have surprisingly good transparency (i.e. low haze). Moreover the polypropylene compositions also have larger processing windows for the stretch blow moulding step compared to unimodal random polypropylene copolymers. As a result, articles with low haze can be prepared by ISBM without highly precise temperature control, and improved throughput may be achieved.

In a typical ISBM process, a preform is initially formed. In this process compositions as hereinbefore defined are heated to melt them to form a flowable polymer melt that is introduced by injection into a mould. The injection mould has a cavity and a mating ram to form the preform into the desired shape, e.g. one having threaded neck portion and a bottle body portion. The preform can then be removed from the mould, cooled and stored until it is ready to be formed into an article or the preform can be stretched and blown straight away.

Thus two types of ISBM process are generally practised. In the single-stage process a preform is injection moulded, stretched and blown before it is allowed to cool. In the two-stage process the injection moulded preform is allowed to cool before it is reheated and stretched and blown into a container. These processes are well known and the person skilled in the art would be able to choose appropriate process conditions. Ideally however, the stretching temperatures used are between 110°C and 160°C, e.g. 130°C.

During the stretching step the polypropylene composition is stretched in both the machine direction and the transverse direction. Stretching may be carried out by any conventional technique using any conventional stretching devices which are well known to those skilled in the art. Preferably, however, the polypropylene composition is stretched using an ISBM machine (e.g. a one-cavity SIG Corpoplast LB01HR machine). The effect of stretching in the machine and transverse directions is to biaxially orient the polypropylene composition.

To prepare the preform for stretch blow moulding the preform is heated to the desired temperature. The preform is then placed within a suitably shaped mould and a gas, such as air or nitrogen, is injected into the internal volume of the preform through a nozzle as a push rod forces the polypropylene composition to expand outwardly to fill the mould. This is the stretching and blowing stage of the process where the processing window of the material is critical. During this step the polypropylene composition becomes biaxially oriented which improves the physical and optical properties of the article, especially its transparency.

Preferably the preform is stretched at least 2 times, preferably 2 to 4 times, its original length (e.g. in the machine direction). This may alternately be stated as a draw ratio of at least. 1:2, i.e. "1" represents the original length of the preform and "2" denotes that it has been stretched to 2 times that original length. Preferred preforms of the invention are stretched in the machine direction in a draw ratio of at least 1:2, more preferably between 1:2 and 1:4, e.g. between 1:2.5 and 1:3.5.

Preferably the preform is stretched at least 2 times, preferably 2 to 4 times, its original diameter (e.g. in the transverse direction). This may alternately be stated as a draw ratio of at least 1:2, i.e. "1" represents the original diameter of the preform and "2" denotes that it has been stretched to 2 times that original diameter. Preferred preforms of the invention are stretched in the transverse direction in a draw ratio of at least 1:2, more preferably between 1:2 and 1:4, e.g. between 1:2.5 and 1:3.5.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing, e.g. the stretch rod may puncture the preform. The processing window for any given polymer is the temperature range over which the polymer can in practice be biaxially stretched.

In the Examples discussed below and for the processing window ranges given below, the processing window for biaxial stretching is measured by stretch blow moulding of 300 ml polypropylene bottles on a one-cavity SIG Corpoplast LB01HR machine from 17 g pre-forms. This machine is equipped with two heater boxes, each having 5 IR lamps (L1-L5), but only one box was used in the determination of processing windows. L1 and L2 were 2500 watt lamps and L3, L4 and L5 were 2000 watt. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. The preform was stretched to 2.2 times its original length in the machine direction and to 2.6 times its original diameter in the transverse direction. A pressure of 6 bar for 1.2 seconds was then used to blow up the bottle.

For each sample, the total heating energy was changed in steps and the resulting pre-form temperatures recorded to find the upper preform temperature and lower preform temperature at which bottles without visible failures can be blown. This range is defined as the processing window.

Visible failures will be readily determined by those skilled in the art. For example, temperatures that are too low for stretching causes the stretch rod to puncture the preform. Temperatures that are too high for stretching cause the polymer to melt and leads to variations in the thickness of the blown articles.

The polymer compositions of the invention exhibit a reasonable processing window (measured as hereinbefore described). Preferably the processing window is 5 °C or more, still more preferably 7 °C or more. Still more preferably the processing window is 5-10 °C.

Moreover the moulded articles that result from ISBM processes have excellent mechanical and optical properties. Haze values of less than 10%, preferably less than 8%, more preferably less than 5 %, e.g. less than 2 % are achievable on ISBM articles having a thickness of 0.5 mm. More specifically haze values of 0-10 %, e.g. 1-8% may be achieved on ISBM articles having a thickness of 0.5 mm. It is envisaged that the polymer composition of the invention, when biaxially stretched results in a surface of more perfect molecular orientation leading to improved clarity.

The tensile modulus of moulded articles that result from ISBM processes is preferably more than 800 MPa, more preferably higher than 1000 MPa, still more preferably higher than 1100 MPa. For example the tensile modulus of the moulded article that results is preferably 800-2000 MPa, e.g. 850-1500 MPa.

The Charpy notched impact strength (as measured according to ISO 179 at 23 °C as described in the examples)

of moulded articles that result from ISBM processes is preferably at least 4.0 kJ/$m^2$, more preferably at least 6.0 kJ/$m^2$. For example, the Charpy notched impact strength of moulded articles may be 4-10 kJ/$m^2$, e.g. 5-8 kJ/$m^2$.

Representative examples of articles that may be prepared using the polypropylene compositions hereinbefore described include containers for use in the medical and food industries, e.g. containers for use in the medical industry. These include bottles, bags and boxes for use in both industries as well as syringes, pipettes, vials, ampoules, petri dishes, culture tubes, test tubes and biohazard waste containers for use in the medical industry. Preferably the article is for use in the medical industry, e.g. the article is a syringe, pipette, vial, ampoule, petri dish, culture tube, test tube, biohazard waste container, box or bottle. Preferably the article is a bottle for use in the medical industry. Preferably the article is not a film or sheet.

The invention will now be described with further reference to the following non-limiting examples and figures. Figure 1 shows where haze was measured on a blown bottle.

EXAMPLES

**Analytical Tests**

Values quoted in the description/examples are measured according to the following tests:

- The melt flow rate (MFR) is determined according to ISO 1133 and is indicated in g/10 min. The MFR is an indication of the melt viscosity of the polymer. The MFR is determined at 230 °C for PP. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

- Density is measured according to ISO 1183/D

- Comonomer content was determined in a known manner based on FTIR measurements calibrated with $^{13}C$ NMR.

- The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 μL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene, polyethylene and polypropylene (K: 19 x $10^{-3}$ dL/g and a: 0.655 for PS, K: 39 x $10^{-3}$ dL/g and a: 0.725 for PE and K: 19 x $10^{-3}$ dL/g and a: 0.725 for PP). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

- The xylene soluble fraction (XS) was determined as follows:

  2.0 g of polymer are dissolved in 250 ml p-xylene at 135°C under agitation. After 30 minutes, the solution was allowed to cool for 15 minutes at ambient temperature and then allowed to settle for 30 minutes at 25± 0.5°C. The solution was filtered with filter paper into two 100 ml flasks. The solution from the first 100 ml vessel was evaporated in nitrogen flow and the residue dried under vacuum at 90°C until constant weight is reached. Xylene soluble fraction (percent) can then be determined as follows:

$$XS\% = (100 \text{ x } m_1 \text{ x } v_0)/(m_0 \text{ x } v_1),$$

  wherein $m_0$ designates the initial polymer amount (grams), $m_1$ defines the weight of residue (grams), $v_0$ defines the initial volume (milliliter) and $v_1$ defines the volume of analyzed sample (milliliter).

The isotacticity of the polymer was taken as the insoluble portion.

The solution from the second 100 ml flask was treated with 200 ml of acetone under vigorous stirring. The precipitate was filtered and dried in a vacuum oven at 90°C. This solution can be employed in order to determine the

amorphous part of the polymer (AM) using the following equation:

$$AM\% = (100 \times m_1 \times v_0)/(m_0 \times v_1)$$

wherein $m_0$ designates the initial polymer amount (grams), $m_1$ defines the weight of residue (grams), $v_0$ defines the initial volume (milliliter) and $v_1$ defines the volume of analyzed sample (milliliter).
• Melting temperature ($T_m$), crystallization temperature ($T_c$) and degree of crystallinity ($X_c$) were measure according to ISO11357. The samples were cut from compression molded, 0.2 mm films. The measurements were performed at the following conditions:

| Stage | Temperature Program | Heating/Cooling Rate *°C/min* | Time *min* |
|---|---|---|---|
| 1st heating | 20-225 °C | 10 | |
| Isothermal | 225 °C | | 5 |
| Cooling | 225-20 °C | -10 | |
| Isothermal | 20 | | 1 |
| 2nd heating | 20-225 °C | 10 | |

The $T_m$ and $X_c$ were determined from the second heating. The degree of crystallinity (Xc) was calculated using a melting enthalpy of 100 % PP equal to 209 J/g.

- Haze was measured on injection moulded plaques according to ASTM D1003 at a thickness of 1 mm unless otherwise indicated and on injection stretch blow moulded bottles according to ASTM D1003 at a thickness of 0.5 mm unless otherwise indicated.

- Charpy impact strength was determined according to ISO 179-1:2000 on V-notched samples at 23 °C (Charpy impact strength (23°C)). The test specimens were prepared by injection moulding as described in EN ISO 1873-2 (80 x 10 x 4 mm)

- Tensile modulus was measured on specimen according to ISO3167 (Multipurpose test specimen, type A (injected moulded) or B (milled)) according to ISO 527-2:1993. The modulus was measured at a speed of 50mm/min

**Materials**

The following polypropylene compositions were employed in the examples:

| | Component (A) | Component (B) | $MFR_2$ (g/10 mins) | $C_2$ (% mol) | Nucleating Agent |
|---|---|---|---|---|---|
| 1 | $C_3/C_2$ random copolymer | $C_3/C_2$ random copolymer | 19 | 5.7 | Polymer of VCH# |
| 2 | PP homopolymer | $C_3/C_2$ copolymer | 26 | 3.5 | Polymer of VCH# |
| CE1* | PP homopolymer | $C_3/C_2$ copolymer | 18 | 3.5 | Millad 3988 |
| CE2* | Random $C_2/C_3$ copolymer | | 20 | 5.0 | Millad 3988 |
| * Comparative Example<br># Vinyl cyclohexane | | | | | |

**Production of Polypropylene Compositions**

<u>Compositions 1 and 2</u>

These were prepared according to the process described in WO99/24478, Example 8 using a multistage polymerisation process comprising a prepolymerisation, a polymerisation in a loop reactor (slurry polymerisation), followed by a final polymerisation in a gas phase reactor. In the case of composition 1, ethylene was additionally supplied

to the loop reactor during slurry polymerisation. The polymerisation conditions used are summarised in the Table below. The ZN catalyst used is described in US5,234,879.

Composition CE 1

This was prepared according to the same process as compositions 1 and 2 but without using VCH. 1700 ppm Millad 3988 was added at the end of polymerisation. The polymerisation conditions used are summarised in the Table below.

Composition CE2

This is a commercially available random polypropylene ethylene polymer that contains 1700 ppm Millad 3988.

| | 1 | 2 | CE1 | CE2 |
|---|---|---|---|---|
| Al/D (mol/mol) | 10 | 10 | 10 | |
| Loop/GPR Split % | 53/47 | 48/52 | 66/34 | |
| Loop | | | | |
| Temperature (°C) | 80 | 85 | 85 | |
| MFR2 (g/10 min) | 21 | 26 | 10 | |
| Ethylene content (wt-%) | 2.5 | 0.0 | 0.0 | |
| GPR | | | | |
| Temperature (°C) | 85 | 85 | 85 | |
| Final product | | | | |
| Ethylene content (wt-%) | 3.8 | 2.3 | 2.3 | 3.3 |
| MFR2 (g/10 min) | 19 | 26 | 18 | 20 |
| XS (%) | 6.3 | 5.2 | 4.7 | 6.5 |
| Tm (°C) | 148 | 162 | 164 | 148 |
| Tc (°C) | 119 | 127 | 129 | 120 |

**Example 1 - Injection Stretch Blow Moulding of polypropylene compositions to form bottles**

PPreX® pre-forms with neck dimension 38/10mm and weight 17 g were injection moulded at standard conditions for PP having a $MFR_2$ of 20.

Polypropylene bottles (300 ml) were stretch blow moulded on a one-cavity SIG Corpoplast LB01HR machine from the pre-forms. This machine is equipped with two heater boxes, each having 5 IR lamps (L1-L5), but only one box was used in these experiments. L1 and L2 were 2500 watt lamps and L3, L4 and L5 were 2000 watt. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. The preform was stretched to 2.2 times its original length in the machine direction and to 2.6 times its original diameter in the transverse direction. A pressure of 6 bar for 1.2 seconds was then used to blow up the bottle.

For each sample, the total heating energy was changed in steps and the resulting pre-form temperatures recorded to find the upper preform temperature and lower preform temperature at which bottles without visible failures can be blown (the processing window). The results are shown in the table below.

| | 1 | 2 | CE1 | CE2 |
|---|---|---|---|---|
| Upper Heating value (%) | 64 | 78 | 85 | 68 |
| Upper Temperature (°C) | 139 | 155 | 156 | 136 |
| Lower Heating value (%) | 56 | 68 | 69 | 62 |
| Lower Temperature (°C) | 132 | 150 | 151 | 133 |
| Processing window (°C) | 7 | 5 | 5 | 3 |

For all samples haze was then analysed at the top of each bottle, as shown in figure 1, according to ASTM D1003. The thickness of the top section of the bottles (i.e. where haze was measured) was also determined using a micrometer (screw form with gauge).

For comparison purposes, the haze of injection moulded plaques prepared from each of the compositions was also determined.

| | 1 | 2 | CE1 | CE2 |
|---|---|---|---|---|
| Tc (°C) | 119 | 127 | 129 | 120 |
| IM Plaques: | | | | |
| Haze (%) | 29 | 36 | 24 | 10 |
| Thickness (mm) | 1 | 1 | 1 | 1 |
| Tensile modulus (MPa) | 885 | 1200 | 1280 | 1150 |
| Charpy Impact (kJ/m$^2$) | 7.6 | 5.3 | 6.2 | 6.0 |
| ISBM Bottles: | | | | |
| Processing window (°C) | 7 | 5 | 5 | 3 |
| Haze (%) | 1.4 | 4.5 | 2.5 | 2.7 |
| Thickness (mm) | 0.5 | 0.62 | 0.52 | 0.33 |

The results show that the articles of the present invention have a low haze (i.e. high transparency). The article made by ISBM of composition 1 has a lower haze at a thickness of 0.5 mm than the article made by ISBM of the comparative example 2 at a smaller thickness (0.33 mm).

Moreover the results show that the polypropylene composition of the invention advantageously has a broader processing window than random propylene copolymer. This facilitates ISBM. The absence of Millad in the bottles according to the invention advantageously means they can be used in the medical industry.

## Claims

**1.** An article comprising a biaxially oriented polypropylene composition,
wherein said composition comprises:

(i) a multimodal polypropylene comprising:

(A) at least 5 % wt of a propylene homopolymer or a propylene copolymer; and
(B) at least 5 % wt of a propylene copolymer having a different comonomer content to that of component (A); and

(ii) a polymeric nucleating agent wherein said polymeric nucleating agent is a homopolymer of a vinyl compound of formula (I)

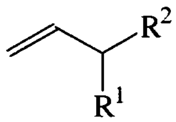

(I)

wherein $R^1$ and $R^2$, together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

**2.** An article as claimed in claim 1 wherein at least 10 % wt of the total weight of polypropylene derives from each polymer.

**3.** An article as claimed in claims 1 to 2, wherein said copolymer(s) is a random propylene copolymer,

**4.** An article as claimed in claim 3, wherein said copolymer(s) is a propylene ethylene copolymer.

**5.** An article as claimed in any preceding claim, wherein the ethylene content of the composition is 1 to 7 ml%.

**6.** An article as claimed in any preceding claim wherein the melt flow rate of the composition is 5 to 30 g/10 min when measured according to ISO 1133 at 230°C and a load of 2.16 kg.

**7.** An article as claimed in any preceding claim, wherein said vinyl compound is selected from vinyl cyclohexane, vinyl cyclopentane, or vinyl-2-methyl cyclohexane, or a mixture thereof.

**8.** An article as claimed in any preceding claim, wherein the amount of polymeric nucleating agent is 0.1 to 100 ppm wt, preferably 0.5 to 50 ppm wt.

**9.** An article as claimed in any preceding claim, wherein said composition does not comprise any non-polymeric nucleating agents.

**10.** An article as claimed in any preceding claim, wherein said article has a haze of less than 10 % as measured on an injection stretch blow moulded bottle having a thickness of 0.5 mm.

**11.** An article as claimed in any preceding claim, wherein said multimodal polypropylene has a processing window of 5 °C or more.

**12.** An article as claimed in any preceding claim which is a container for use in the medical or food industry (e.g. medical industry).

**13.** A process for making an article as claimed in any preceding claim comprising injection stretch blow moulding a polypropylene composition, wherein said composition comprises:

(i) a multimodal polypropylene comprising:

(A) at least 5 % wt of a propylene homopolymer or a propylene copolymer; and
(B) at least 5 % wt of a propylene copolymer;
and

(ii) a polymeric nucleating agent wherein said polymeric nucleating agent is a homopolymer of a vinyl compound of formula (I)

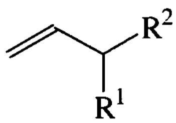

(I)

wherein $R^1$ and $R^2$, together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

**14.** An article as claimed in claim 1 wherein component (A) is a propylene copolymer.

**Patentansprüche**

**1.** Gegenstand der eine biaxial orientierte Polypropylenzusammensetzung aufweist, wobei die Zusammensetzung folgendes umfaßt:

(i) ein multimodales Polypropylen, umfassend:

(A) mindestens 5 Gew.-% eines Propylenhomopolymers oder eines Propylencopolymers; und
(B) mindestens 5 Gew.-% eines Propylencopolymers mit einem anderen Comonomergehalt als der der Komponente (A); und

(ii) einen polymeren Keimbildner, wobei dieser polymere Keimbildner ein Homopolymer einer Vinylverbindung der Formel (I) ist:

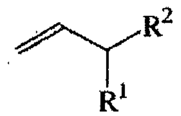

(I)

worin $R^1$ und $R^2$ zusammen mit dem Kohlenstoffatom, an das sie gebunden sind, ein gegebenenfalls substituiertes, kondensiertes Ringsystem oder einen gesättigten, ungesättigten oder aromatischen Ring bilden, wobei das Ringsystem oder der Ring 4 bis 20 Kohlenstoffatome aufweist (z.B. 5 bis 12 Kohlenstoffatome), oder $R^1$ und $R^2$ unabhängig voneinander für ein lineares oder verzweigtes $C_{4-30}$-Alkan, ein $C_{4-20}$-Cycloalkan oder einen aromatischen $C_{4-20}$-Ring stehen.

**2.** Gegenstand nach Anspruch 1, wobei mindestens 10 Gew.-% des Gesamtgewichts des Polypropylens von jedem Polymer stammen.

**3.** Gegenstand nach den Ansprüchen 1 und 2, wobei das (die) Copolymer(e) ein statistisches Propylencopolymer ist (sind).

**4.** Gegenstand nach Anspruch 3, wobei das (die) Copolymer(e) ein Propylen-Ethylen-Copolymer ist (sind).

**5.** Gegenstand nach einem der vorstehenden Ansprüche, wobei der Ethylengehalt der Zusammensetzung 1 bis 7 Mol-% beträgt.

**6.** Gegenstand nach einem der vorstehenden Ansprüche, wobei die Schmelzfließrate der Zusammensetzung 5 bis 30 g/10 min beträgt, und zwar gemäß ISO 1133 bei 230°C und einer Last von 2,16 kg gemessen.

**7.** Gegenstand nach einem der vorstehenden Ansprüche, wobei die Vinylverbindung aus Vinylcyclohexan, Vinylcyclopentan oder Vinyl-2-methylcyclohexan oder einem Gemisch davon ausgewählt ist.

**8.** Gegenstand nach einem der vorstehenden Ansprüche, wobei die Menge des polymeren Keimbildners 0,1 bis 100 Gew.-teile auf eine Million, vorzugsweise 0,5 bis 50 Gew.-teile auf eine Million beträgt.

**9.** Gegenstand nach einem der vorstehenden Ansprüche, wobei die Zusammensetzung keine nicht-polymeren Keimbildner aufweist.

**10.** Gegenstand nach einem der vorstehenden Ansprüche, wobei der Gegenstand ein Trübung von weniger als 10 %

aufweist, und zwar bei einer durch Spritzstreckblasen geformten Flasche mit einer Dicke von 0,5 mm gemessen.

**11.** Gegenstand nach einem der vorstehenden Ansprüche, wobei das multimodale Polypropylen ein Verarbeitungsfenster von 5°C oder mehr aufweist.

**12.** Gegenstand nach einem der vorstehenden Ansprüche, der ein Behälter für die Verwendung in der medizinischen oder der Nahrungsmittelindustrie (z.B. der medizinischen Industrie) ist.

**13.** Verfahren zum Herstellen eines Gegenstandes nach einem der vorstehenden Ansprüche, das das Spritzstreckblasen einer Polypropylenzusammensetzung umfaßt, wobei die Zusammensetzung folgendes aufweist:

(i) ein multimodales Polypropylen, umfassend:

(A) mindestens 5 Gew.-% eines Propylenhomopolymers oder eines Propylencopolymers; und
(B) mindestens 5 Gew.-% eines Propylencopolymers; und

(ii) einen polymeren Keimbildner, wobei dieser polymere Keimbildner ein Homopolymer einer Vinylverbindung der Formel (I) ist:

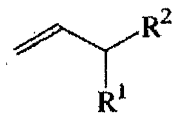

(I)

worin $R^1$ und $R^2$ zusammen mit dem Kohlenstoffatom, an das sie gebunden sind, ein gegebenenfalls substituiertes, kondensiertes Ringsystem oder einen gesättigten, ungesättigten oder aromatischen Ring bilden, wobei das Ringsystem oder der Ring 4 bis 20 Kohlenstoffatome aufweist (z.B. 5 bis 12 Kohlenstoffatome), oder $R^1$ und $R^2$ unabhängig voneinander für ein lineares oder verzweigtes $C_{4-30}$-Alkan, ein $C_{4-20}$-Cycloalkan oder einen aromatischen $C_{4-20}$-Ring stehen.

**14.** Gegenstand nach Anspruch 1, wobei die Komponente (A) ein Propylencopolymer ist.

## Revendications

**1.** Article comprenant une composition de poly(propylène) orientée biaxialement, dans lequel ladite composition comprend :

(i) un poly(propylène) multimodal comprenant :

(A) au moins 5 % en poids d'un homopolymère de propylène ou d'un copolymère de propylène ; et
(B) au moins 5 % en poids d'un copolymère de propylène ayant une teneur en comonomère différente de celle du composant (A) ;
et

(ii) un agent de nucléation polymérique dans lequel ledit agent de nucléation polymérique est un homopolymère d'un composé vinyle de formule (I)

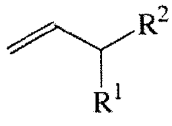

(I)

dans laquelle $R^1$ et $R^2$, conjointement avec l'atome de carbone auquel ils sont attachés, forment un système de cycle fusionné facultativement substitué ou un cycle saturé, insaturé ou aromatique, dans lequel ledit système de cycle ou ledit cycle comprend 4 à 20 atomes de carbone (par exemple, 5 à 12 atomes de carbone) ou $R^1$

et $R^2$ représentent indépendamment un alcane en $C_{4\ à\ 30}$ linéaire ou ramifié, un cycloalcane en $C_{4\ à\ 20}$ ou un cycle aromatique en $C_{4\ à\ 20}$.

**2.** Article selon la revendication 1, dans lequel au moins 10 % en poids du poids total du poly(propylène) provient de chaque polymère.

**3.** Article selon les revendications 1 et 2, dans lequel ledit ou lesdits copolymères sont un copolymère de propylène statistique.

**4.** Article selon la revendication 3, dans lequel ledit ou lesdits copolymères sont un copolymère de propylène-éthylène.

**5.** Article selon l'une quelconque des revendications précédentes, dans lequel la teneur en éthylène de la composition est de 1 à 7 % en mole.

**6.** Article selon l'une quelconque des revendications précédentes, dans lequel l'indice de fluage de la composition est de 5 à 30 g/10 min, lorsqu'il est mesuré selon la norme ISO 1133 à 230 °C et à une charge de 2,16 kg.

**7.** Article selon l'une quelconque des revendications précédentes, dans lequel ledit composé vinyle est choisi parmi le vinylcyclohexane, le vinylcyclopentane ou le vinyl-2-méthylcyclohexane ou un mélange de ces derniers.

**8.** Article selon l'une quelconque des revendications précédentes, dans lequel la quantité d'agent de nucléation polymérique est de 0,1 à 100 ppm en poids, de préférence de 0,5 à 50 ppm en poids.

**9.** Article selon l'une quelconque des revendications précédentes, dans lequel ladite composition ne comprend aucun agent de nucléation non polymérique.

**10.** Article selon l'une quelconque des revendications précédentes, dans lequel ledit article a un voile inférieur à 10 % tel que mesuré sur une bouteille moulée par étirage-soufflage par injection ayant une épaisseur de 0,5 mm.

**11.** Article selon l'une quelconque des revendications précédentes, dans lequel ledit poly(propylène) multimodal a une fenêtre de traitement de 5 °C ou plus.

**12.** Article selon l'une quelconque des revendications précédentes, qui est un contenant destiné à une utilisation dans l'industrie médicale ou alimentaire (par exemple l'industrie médicale).

**13.** Procédé de préparation d'un article selon l'une quelconque des revendications précédentes, comprenant le moulage par étirage-soufflage par injection d'une composition de poly(propylène), dans lequel ladite composition comprend :

(i) un poly(propylène) multimodal comprenant :

(A) au moins 5 % en poids d'un homopolymère de propylène ou d'un copolymère de propylène ; et
(B) au moins 5 % en poids d'un copolymère de propylène ; et

(ii) un agent de nucléation polymérique dans lequel ledit agent de nucléation polymérique est un homopolymère d'un composé vinyle de formule (I)

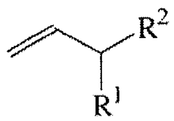

(I)

dans laquelle $R^1$ et $R^2$, conjointement avec l'atome de carbone auquel ils sont attachés, forment un système de cycle fusionné facultativement substitué ou un cycle saturé, insaturé ou aromatique, dans lequel ledit système de cycle ou ledit cycle comprend 4 à 20 atomes de carbone (par exemple, 5 à 12 atomes de carbone) ou $R^1$ et $R^2$ représentent indépendamment un alcane en $C_{4\ à\ 30}$ linéaire ou ramifié, un cycloalcane en $C_{4\ à\ 20}$ ou un cycle aromatique en $C_{4\ à\ 20}$.

**14.** Article selon la revendication 1, dans lequel le composant (A) est un copolymère de propylène.

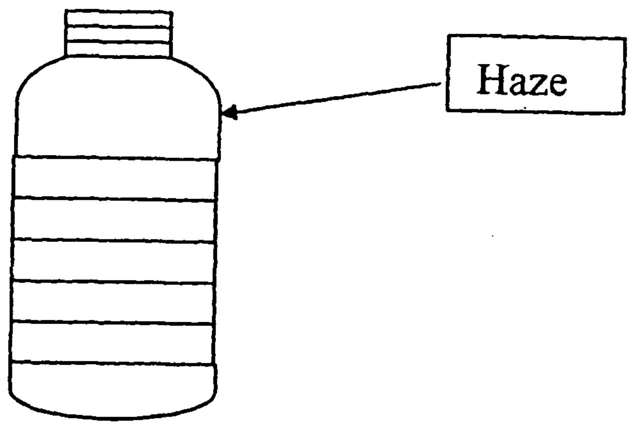


Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0251340 A
- EP 1674238 A
- WO 0238383 A
- US 4696979 A
- EP 0151883 A
- US 5286540 A
- EP 0887379 A
- WO 9212182 A
- US 5234879 A
- WO 9924501 A
- WO 9924478 A


### Non-patent literature cited in the description


- **K. K. McAuley ; J. F. McGregor.** On-line Inference of Polymer Properties in an Industrial Polyethylene Reactor. *AIChE Journal,* June 1991, vol. 37 (6), 825-835